# EUROPEAN PATENT APPLICATION

(11) **EP 3 594 008 A1**
(43) Date of publication of application: **15.01.2020**
(21) Application number: 18182565.4
(22) Date of filing: 10.07.2018
(51) Int. Cl.: B41M 5/24, B41M 5/26, B29C 65/16, B23K 26/324, B23K 26/402, C09B 23/00

(54) **NEAR INFRARED (NIR) LASER PROCESSING OF RESIN BASED ARTICLES**

(71) Applicant: AGFA-GEVAERT NV, 2640 Mortsel (BE)
(72) Inventor: DESMET, Tim, 2640 Mortsel (BE); LAZREG, Faima, 2640 Mortsel (BE); VAN AERT, Hubertus, 2640 Mortsel (BE)
(74) Representative: Viaene, Kris

(57) **Abstract**

A near infrared (NIR) laser processable resin based article comprising a specific optothermal converting.

The specific optothermal converting has an improved thermal stability and therefore renders the preparation of the resin based article more reliable.

## Description

### Technical field of the Invention

The present invention relates to Near Infrared (NIR) laser processing of resin based articles.

### Background art for the invention

High resolution processing or converting of resin based articles is a significant challenge, especially for small size or thin resin based articles.

Mechanical processing, such as cutting, drilling or perforating often causes unwanted damage to the cutting or drilling edges. In the case of small size or very thin resin based articles mechanical processing is often even impossible due to the physical properties of the resin used, which can be sensitive to creep or other irreversible deformations during processing, unacceptably compromising the end result.

Laser processing is an alternative contactless method having several advantages compared to mechanical processing.

However, as many resins are as such non responsive to laser radiation or only responsive to high power long wavelength lasers such as CO₂ lasers, controlling the impact of the laser light on the polymer based article is very difficult resulting in similar problems as mechanical processing. Additionally, burn marks may be the result of the laser processing. By using such type of lasers, selective welding of certain polymer based parts is for example impossible.

Near Infrared (NIR) lasers have the advantage of much better controllable laser power and a higher resolution. However, hardly any polymer as such is responsive to NIR laser light.

To render a resin based article responsive to NIR radiation, a NIR absorbing compound may be added to the resin based article.

A disadvantage of NIR absorbing compounds may be their absorption in the visible region resulting in a decrease of the transparency of the resin based article when added thereto.

Inorganic pigments that have little absorption in the visible region, which have been added to a transparent resin based articles, are often heavy metal oxides or metal salts. For example, WO2009/059901 (BASF) and EP-A 697433 (General Motors) disclose pigments comprising respectively tungsten oxide or copper salts. Using such metal containing pigments in resin based articles, for example packaging foils, may however result in health and safety issues, for example relating to the toxicity of such compounds.

Instead of inorganic pigments, NIR absorbing dyes, such as cyanine dyes, may be used. For example, the NIR dyes disclosed in EP-A 3327088 (Agfa Gevaert) also have little absorbance in the visible region.

A disadvantage of such NIR absorbing cyanine dyes may be their limited stability towards for heat. Therefore, such dyes often decompose during the extrusion process, resulting in a decrease of the laser processability of the obtained resin based article. In addition, such decomposition often results in a coloration of the resin based article.

Copper Phthalocyanine dyes, for example the commercial available Pro-Jet™ series, have a sufficient thermal stability to enable incorporation in resin based articles. However, they also comprise metals and these compounds do not have an absorption above 1000 nm.

There is thus a need for laser processable resin based articles containing NIR absorbing compounds having an improved heat resistance.

### Summary of the invention

It is an object of the present invention to provide a resin based article comprising NIR absorbing compounds having an improved heat stability.

This object is realised with the method as defined in claim 1.

Further objects of the invention will become apparent from the description hereinafter.

### Brief description of the drawings

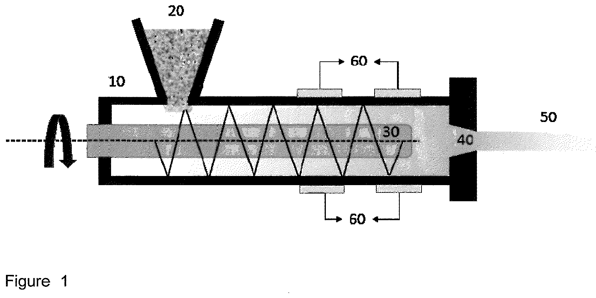

Figure 1 shows schematically an extrusion process to prepare a laser processable resin according to the present invention.

### Detailed description of the invention

### Definitions

Unless otherwise specified the term "alkyl" means all variants possible for each number of carbon atoms in the alkyl group i.e. methyl, ethyl, for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethyl-propyl and 2-methylbutyl, etc.

Unless otherwise specified a substituted or unsubstituted alkyl group is preferably a C₁ to C₆-alkyl group.

Unless otherwise specified a substituted or unsubstituted alkenyl group is preferably a C₂ to C₆-alkenyl group.

Unless otherwise specified a substituted or unsubstituted alkynyl group is preferably a C₂ to C₆-alkynyl group.

Unless otherwise specified a substituted or unsubstituted aralkyl group is preferably a phenyl or naphthyl group including one, two, three or more C₁ to C₆-alkyl groups.

Unless otherwise specified a substituted or unsubstituted alkaryl group is preferably a C₇ to C₂₀-alkyl group including a phenyl group or naphthyl group.

Unless otherwise specified a substituted or unsubstituted aryl group is preferably a phenyl group or naphthyl group

Unless otherwise specified a substituted or unsubstituted heteroaryl group is preferably a five- or six-membered ring substituted by one, two or three oxygen atoms, nitrogen atoms, sulphur atoms, selenium atoms or combinations thereof.

The term "substituted", in e.g. substituted alkyl group means that the alkyl group may be substituted by other atoms than the atoms normally present in such a group, i.e. carbon and hydrogen. For example, a substituted alkyl group may include a halogen atom or a thiol group. An unsubstituted alkyl group contains only carbon and hydrogen atoms

Unless otherwise specified a substituted alkyl group, a substituted alkenyl group, a substituted alkynyl group, a substituted aralkyl group, a substituted alkaryl group, a substituted aryl and a substituted heteroaryl group are preferably substituted by one or more constituents selected from the group consisting of methyl, ethyl, n-propyl, isopropyl, n-butyl, isobutyl and tertiary-butyl, ester, amide, ether, thioether, ketone, aldehyde, sulfoxide, sulfone, sulfonate ester, sulphonamide, -CI, -Br, -I, -OH, -SH, - CN and -NO₂.

### Infrared laser processable resin

The laser processable resin according to the present invention comprises an optothermal converting agent as described below.

### Optothermal converting agent

An optothermal converting agent as used herein means a compound or particle capable of absorbing radiation, preferably in the area of 780 to 2000 nm, and converting it into heat.

The optothermal converting agent includes a NIR absorbing compound having a chemical structure according to Formula I, 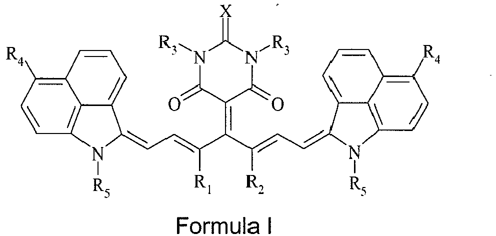 wherein
X is O or S,
R₁ and R₂ represent the necessary atoms to form a substituted or unsubstituted 5 or 6 membered ring,
R₃ and R₅ are independently selected from the group consisting of an unsubstituted alkyl group, an unsubstituted alkenyl group, an unsubstituted alkynyl group, an unsubstituted aralkyl group, an unsubstituted alkaryl group and a substituted or unsubstituted (hetero)aryl group,
R₄ is selected from the group consisting of a hydrogen, an unsubstituted alkyl group, an unsubstituted alkenyl group, an unsubstituted alkynyl group, an unsubstituted aralkyl group, an unsubstituted alkaryl group, a substituted or an unsubstituted (hetero)aryl group, a halogen, an unsubstituted alkoxy group, a substituted or an unsubstituted aryloxy group, a substituted or an unsubstituted heteroaryloxy group, an ester, an amine, an amide, a nitro, a thioalkyl group, a substituted or an unsubstituted thioaryl group, a substituted or an unsubstituted thioheteroaryl group, a carbarmate, an ureum, a sulfonamide, a sulfoxide and a sulfone,
with the proviso that all hydrocarbon groups in Formula I are straight chain hydrocarbon groups.

A straight chain hydrocarbon group as used herein means a linear hydrocarbon group, which is not further functionalized with hydrocarbon substituents.

A hydrocarbon group as used herein means a functional group only consisting of carbon atoms in the main chain or ring.

The hydrocarbon group is preferably selected from the group consisting of an alkyl group, an alkenyl group, an alkynyl group and an aralkyl group.

In a preferred embodiment, R₃ and R₅ are independently selected from the group consisting of an unsubstituted alkyl group, an unsubstituted alkaryl group and an unsubstituted (hetero)aryl group.

In a more preferred embodiment, R₃ and R₅ are independently selected from the group consisting of an unsubstituted lower alkyl group containing no more then six carbon atoms and an unsubstituted alkaryl group.

In a particularly preferred embodiment, R₃ and R₅ are independently selected from the group consisting of a methyl group, an ethyl group, a n-propyl group, a n-butyl group, a benzyl group and an aryl group.

In all embodiments described above, R₄ is preferably selected from the group consisting of a hydrogen, a halogen, a straight chain unsubstituted alkyl group and a straight chain unsubstituted alkoxy group.

In all these embodiments, R₄ is more preferably selected from the group consisting of a hydrogen, a chlorine, a bromine, a methyl group, an ethyl group, a methoxy group, an ethoxy group, a n-propoxy group and a n-butoxy group.

The NIR absorbing compound has preferably a chemical structure according to Formula II, 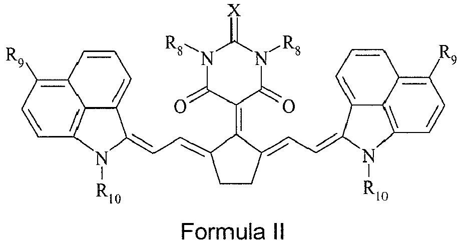 wherein
X is O or S,
R₈ and R₁₀ are independently selected from the group consisting of an unsubstituted alkyl group, an unsubstituted alkenyl group, an unsubstituted alkynyl group, an unsubstituted aralkyl group, an unsubstituted alkaryl group and a substituted or unsubstituted (hetero)aryl group,
R₉ is selected from the group consisting of a hydrogen, an unsubstituted alkyl group, an unsubstituted alkenyl group, an unsubstituted alkynyl group, an unsubstituted aralkyl group, an unsubstituted alkaryl group, a substituted or an unsubstituted (hetero)aryl group, a halogen, an unsubstituted alkoxy group, a substituted or an unsubstituted aryloxy group, a substituted or an unsubstituted heteroaryloxy group, an ester, an amine, an amide, a nitro, a thioalkyl group, a substituted or an unsubstituted thioaryl group, a substituted or an unsubstituted thioheteroaryl group, a carbarmate, an ureum, a sulfonamide, a sulfoxide and a sulfone.

In a particularly preferred embodiment, Rg is selected from the group consisting of a hydrogen, a chlorine, a bromine, a methyl group, an ethyl group, a methoxy group, an ethoxy group, a n-propoxy group and a n-butoxy group.

Specific examples of NIR absorbing compounds according to the present invention are given in Table 1 without being limited thereto.

**Table 1**

| **STRUCTURES** | IR Absorbers |
|---|---|
| 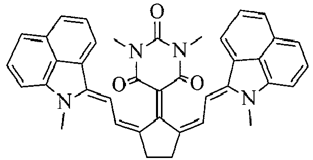 | IR-1 |
| 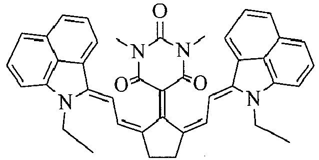 | IR-2 |
| 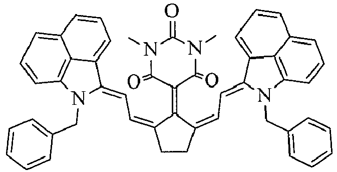 | IR-3 |
| 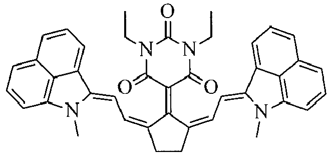 | IR-4 |
| 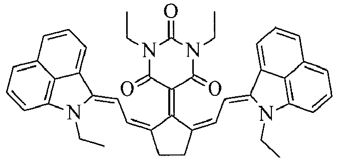 | IR-5 |
| 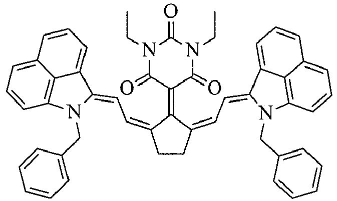 | IR-6 |
| 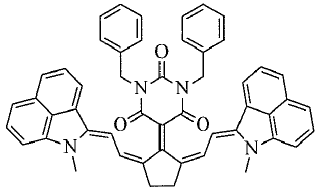 | IR-7 |
| 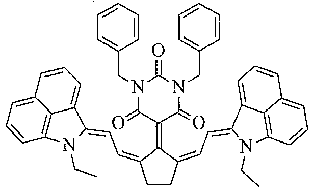 | IR-8 |
| 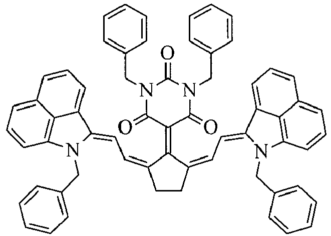 | IR-9 |
| 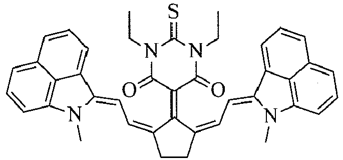 | IR-10 |
| 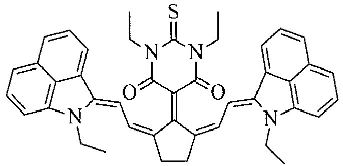 | IR-11 |
| 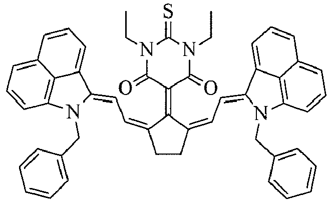 | IR-12 |
| 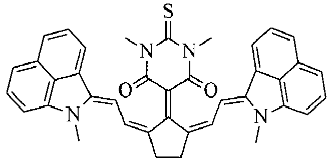 | IR-13 |
| 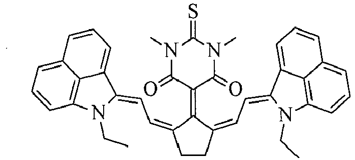 | IR-14 |
| 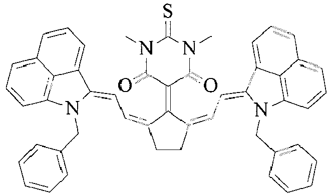 | IR-15 |
| 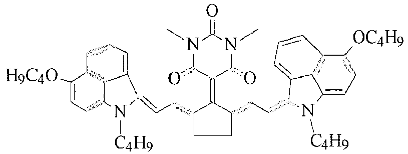 | IR-16 |
| 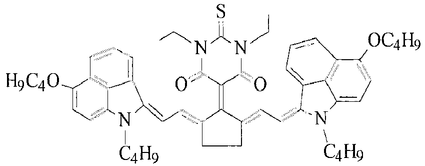 | IR-17 |
| 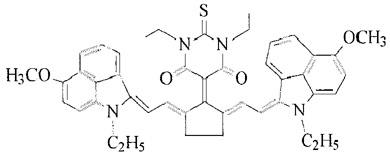 | IR-18 |
| 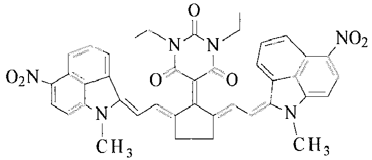 | IR-19 |
| 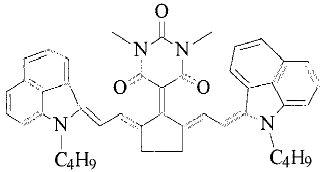 | IR-20 |
| 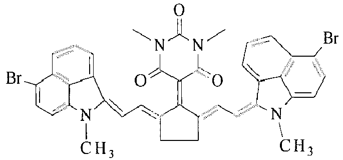 | IR-21 |
| 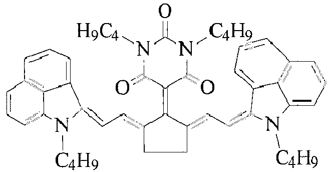 | IR-22 |
| 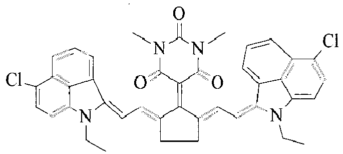 | IR-23 |
| 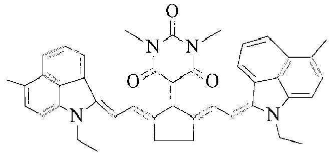 | IR-24 |
| 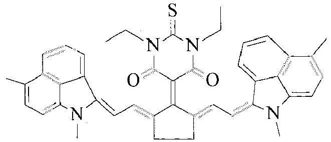 | IR-25 |
| 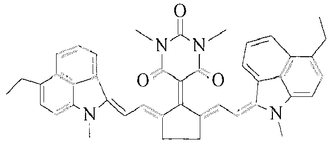 | IR-26 |
| 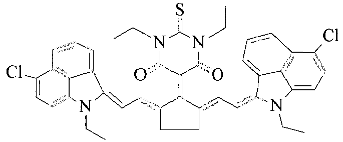 | IR-27 |

Other optothermal converting compounds may be used in combination with the NIR absorbing compound describe above, for example the infrared absorbing pigments or dyes disclosed in WO2016/184881 (Agfa Gevaert), paragraph [042] to [058]).

The amount of optothermal converting agent is preferably at least 10 ppm, more preferably at least 50 ppm, most preferably at least 100 ppm, based on the total weight of the resin.

### Resin

The laser markable article comprises a resin.

The resin may be selected from the group consisting of a synthetic, a semi-synthetic or natural polymeric material.

Synthetic resins are defined as resins requiring at least one polymerization step in the manufacturing of the resin. Typical examples are poly(olefines) such as high density polyethylene (PE), low density PE, polypropylene (PP), polyesters, poly(amides), poly(urethanes), poly(acetals), poly(ethers), or a combination thereof.

Semi-synthetic resins are defined as resins prepared from natural polymers, such as cellulose, by converting into the final resin by at least one synthetic chemical modification step, such as esterification or alkylation. Typical examples are cellulose acetate butyrate (CAB), cellulose triacetate, nitrocellulose, carboxymethyl cellulose, or phthaloyl gelatin.

Natural resin are defined as resins extracted from natural resources. Typical examples are dextranes, pullulan, etc.

Synthetic resins and semi-synthetic resins are particularly preferred, synthetic resins being the most preferred. Poly(esters), poly(amides) and poly(olefins) are particularly preferred, pol(olefins) being the most preferred.

Preferably, the resin based article is a thermoplastic polymeric film or foil.

Examples of thermoplastic polymers include polyolefines such as polyethylene (PE), polypropylene (PP), polyesters such as polyethylene terephthalate (PET), polyethylene 2,5-difurandicarboxylate (PEF) and polyethylene naphthenate (PEN), polylactic acid (PLA), polyacrylonitrile (PAN), polyamides (PA), polyurethanes (PU), polyacetals, such as polyvinylbutyral, polymethyl methacrylate (PMMA), polyimide (PI), polystyrene (PS), polycarbonate (PC), acrylonitrile-butadiene-styrene (ABS), polyvinylchloride (PVC), and copolymers thereof.

Preferred thermoplastic polymers are polyethylene (PE), polypropylene (PP), polyethylene terephthalate (PET) and polyethylene 2,5-furandicarboxylate (PEF).

As PEF may be produced using a biobased furandicarboxylic acid (FDCA), the carbon footpring of its manufacturing process is much smaller compared to for example the production of PET. Moreover, its barrier properties, for example for O₂ and CO₂, may be better.

The laser markable resin is prepared by mixing the optothermal converting agent in the resin. To obtain a substantial homogeneous distribution of the optothermal converting agent is preferably mixed in the melt of the resin, or at least in a situation wherein the resin is softened.

The temperature at which the resin is melted or softened is preferably below 200°C, more preferably below 175°C, most preferably below 150°C.

### Laser markable resin based article

The laser markable article is prepared from the laser markable resin or comprises the laser markable resin.

In principle any method may be used to prepare the laser markable article from the laser markable resin.

For example, casting may be used to shape the laser markable article. Casting involves introducing a liquefied plastic into a mold and allowing it to solidify. In contrast to molding and extrusion, casting relies on atmospheric pressure to fill the mold rather than using significant force to push the plastic into the mold cavity.

The laser markable article is preferably prepared from the laser markable resin by extrusion or injection molding the resin in a desired shape.

According to a preferred embodiment, the laser markable article is prepared by extrusion of the laser markable resin.

Extrusion is a process of manufacturing long products of constant cross-section (rods, sheets, pipes, films, wire insulation coating) forcing soften polymer through a die with an opening.

Figure 1 shows a schematic representation of an extrusion process.

Polymer material in form of pellets is fed into an extruder (10) through a hopper (20). The material is then conveyed forward by a feeding screw (30) and forced through a die (40), converting to continuous polymer product (50). Heating elements (60) soften and melt the polymer. The temperature of the material is controlled by thermocouples. The product (50) going out of the die (40) is cooled by blown air or in water bath.

The optothermal converting agent is preferably added together with the polymer pellets in the hopper (20).

Extrusion of polymers is continuous process lasting as long as raw pellets are supplied.

Extrusion is used mainly for thermoplastics, but elastomers and thermosets may be extruded. In the latter case cross-linking may occur during heating and melting of the material in the extruder.

The extruded film may be further uniaxially or biaxially stretched. Due to a change in the morphology of the molecular structure, the stretched films acquire a wide variety of advantageous properties as well as a reduction of the total thickness.

The optothermal converting agents are preferably fed into the extruder together with the polymer material. The optothermal converting agent is preferably added together with the polymer pellets in the hopper (20).

Preferably, the polymer is added as a powder instead of pellets, to ensure an even more homogeous mixing of the optothermal converting agent.

Polymer powders can be achieved by grinding, milling, ball milling, cryo milling or any other applicable methods.

In another preferred embodiment, the optothermal converting agent are added in the form of a master batch.

A masterbatch (MB) is typically a solid product (normally of plastic, rubber, or elastomer) in which pigments or additives are optimally dispersed at high concentration in a carrier material. The carrier material is compatible with the main resin in which it will be blended during molding, whereby the final resin product obtains the properties from the masterbatch, in the present invention the laser marking properties.

A masterbatch is a concentrated mixture of a pigment or additive, in the present invention of an optothermal converting agent, encapsulated during a heat process into a carrier resin, which is then cooled and cut into a granular shape.

As masterbatches are already premixed compositions, their use alleviates clumping or insufficient mixing of the additive in the resin, resulting in a non-homogeneous distribution of the additive in the resin.

The concentration of the additive in the masterbatch is much higher than in the end-use resin, but the additive is already properly dispersed in the host resin.

The relatively dilute nature of masterbatches (in comparison with the raw additives) allows higher accuracy in dosing small amounts of expensive components. The compact nature of the grains of solid masterbatches eliminates problems with dust, otherwise inherent for fine-grained solid additives.

Solid masterbatches are also solvent-free, therefore they tend to have longer shelf life as the solvent won't evaporate over time. The masterbatch usually contains 40-65% of the additive, but the range can be as wide as 15-80% in extreme cases.

The carrier material of the masterbatch can be based on a wax (universal carrier) or on a specific polymer, identical or compatible with the natural polymer used (polymer-specific).

The carrier resin used to prepare the masterbatch of the optothermal converting agent is preferably the same resin used to prepare laser markable article.

The masterbatch comprising the optothermal converting agent is then added, together with the polymer pellets, to the hopper (20) in the extrusion process described above.

The masterbatch can be also added directly to the machine's screw, as a free-flowing solid or in case of a liquid masterbatch by e.g. a peristaltic pump. Such use of liquid masterbatches allows highly accurate dosing and quick change of color between machine runs.

Injection molding is a process in which molten polymer is forced under high pressure into a mold cavity through an opening (sprue).

Polymer material in form of pellets is fed into an Injection molding machine through a hopper. The material is then conveyed forward by a feeding screw and forced into a split mold, filling its cavity through a feeding system with sprue gate and runners. Injection Molding machine is similar to Extruder. The main difference between the two machines is in screw operation. In extruder screw rotates continuously providing output of continuous long product (pipe, rod, sheet). Screw of injection molding machine is called reciprocating screw since it not only rotates but also moves forward and backward according to the steps of the molding cycle. It acts as a ram in the filling step when the molten polymer is injected into the mold and then it retracts backward in the molding step. Heating elements, placed over the barrel, soften and melt the polymer. The mold is equipped with a cooling system providing controlled cooling and solidification of the material. The polymer is held in the mold until solidification and then the mold opens and the part is removed from the mold by ejector pins. Injection Molding is used mainly for Thermoplastics, but Elastomers and Thermosets are also may be extruded. In this case crosslinking occurs during heating and melting of the material in the heated barrel. A principal scheme of an Injection Molding Machine is shown in the picture. Injection Molding is highly productive method providing high accuracy and control of shape of the manufactured parts. The method is profitable in mass production of large number of identical parts. Injection Molding is highly productive method providing high accuracy and control of shape of the manufactured parts. The method is profitable in mass production of large number of identical parts. Thermoplastics commonly used in Injection Molding are as follows: Polypropylene (PP), Polycarbonate (PC), Acrylonitrile-Butadiene-Styrene (ABS), Nylon 6 (N6).

Injection Molding is used for manufacturing DVDs, pipe fittings, battery casings, toothbrush bases, bottle lids, disposable razors, automobile bumpers and dash boards, power-tool housing, television cabinets, electrical switches, telephone handsets, automotive power brake, automotive fascias, transmission, and electrical parts, mirror housings, steam irons, washer pumps, spoilers, butter tubs, moisture vaporizers, yogurt containers, toilet seats, cell-phone housings, cradles or bases for personal digital assistants, case of a notebook-computer, computer mouse, electrical connector housings, lawn chairs, automotive ashtrays, and cookware appliance handles and knobs, aerosol caps, household items, bottle caps, toys.

The resin based article is preferably a (thin) film or foil, more preferably an extruded film or foil, most preferably a stretched extruded film or foil. The film or foil may be non-transparent or transparent.

The thickness of the foil is preferably less than 750 µm, more preferably less than 500 µm, most preferably less than 250 µm. The thickness of the foil may also be less than 100 µm or even less than 50 µm.

### A method of near infrared (NIR) laser processing a resin based article

The method of NIR processing a resin based article comprises the step of exposing at least part of the laser markable article describe above with a NIR laser.

Laser processing of a resin based article as used herein means any laser induced process resulting in a physical or chemical change in the resin of the resin based article.

Examples of laser processing are laser welding, laser hybrid welding, laser drilling, laser perforation, laser cutting, laser riveting, laser cladding, laser alloying, laser engraving, laser ablation, laser cleaning, laser induced surface modification, laser sintering, or laser welding.

Laser processing is preferably laser welding, laser perforation, laser marking and laser cutting.

Near infrared red (NIR) radiation as used herein means infrared radiation having a wavelength between 780 and 2000 nm.

The NIR laser has an emission wavelength between 780 and 2000 nm, preferably between 930 and 1150 nm. A particularly preferred NIR laser is a NdYAG laser emitting around 1064 nm.

### Laser cutting - perforation

Laser cutting is typically applied for different kinds of materials where complex contours demand precise, fast and force-free processing.

Lasers may create narrow kerfs and thus may achieve high-precision cuts. Laser cutting typically does not show any distortion and in many cases post-processing is not necessary as the component is subject to only little heat input and can mostly be cut dross-free.

Compared to alternative techniques like die cutting, laser cutting is cost-efficient already for small-batch productions. The big benefit of laser cutting is the localized laser energy input providing small focal diameters, small kerf widths, high feed rate and minimal heat input.

Lasers are especially suited for perforating paper or plastic foils. Usually, web material is processed at winder systems at high speeds of up to 700 m/min.

With a laser, perforating hole diameters ranging from 50 - 400 microns can be achieved. Highly sophisticated laser systems may achieve perforating speeds of up to 420,000 holes per second.

In a preferred embodiment, the optothermal converting agent is applied on the cutting or perforating lines of a resin based article, for example a polymeric film or foil.

Cutting or perforation is then carried out by exposing at least part of the applied optothermal converting agent with a NIR laser.

The laser perforation may be used for packaging films. For example, in food packaging films to prolong the freshness and quality of perishable food. Micro perforation enhances the shelf life of vegetables etc. by exchanging oxygen through micro holes in the range of 60 - 100 µm .

Perforations in polymeric foils wrapped around a packaging may facilitate the removal of the wrapped foil. It may be advantageous to incorporate the perforations in the foil when it is already wrapped around the packaging. In that case it is important that laser perforation does not damage the packaging, for example a cardboard packaging.

Using an optothermal converting agent thereby improving the NIR response of the polymeric foil makes it possible to use low power NIR lasers to perforate the foil and therefore to increase the throughput.

Also, polymeric foils are currently often laser processed using very expensive femtoseconds lasers. Using a foil according to the present invention makes it possible to use less expensive and widely used NIR lasers to laser process them.

### Laser Welding

Laser beam welding (LBW) is a welding technique used to join multiple pieces of materials through the use of a laser.

Laser beam welding is typically used for joining components that need to be joined with high welding speeds, thin and small weld seams and low thermal distortion. The high welding speeds, an excellent automatic operation and the possibility to control the quality online during the process make the laser welding a common joining method in the modern industrial production.

Laser-welding of plastics consists in the bonding of thermoplastics under heat and pressure. The bonded surfaces must be in the thermoplastic state.

Laser-welding of plastics is possible only with fusible polymers; in general, all amorphous and semicrystalline thermoplastics, as well as thermoplastic elastomers can be used. Elastomers and thermosets, on the other hand, are not suitable for laser-welding. The temperature at which the resin is exposed must be higher than the melting temperature of the material, but lower than the degradation temperature. A local heat generation in the weld is thus desirable in order to avoid degradation (carbonization).

The fusion temperature regions of the plastic parts to be bonded should overlap, and the melts should be mutually compatible.

During the laser welding process of two plastic materials, the separation (bridged gap) between both is typically less than 100 µm. One plastic material is typically a laser-transparent thermoplastic, selected according to the laser wavelength, which heats up very little, if at all, on the passage of the laser beam.

For a weld seam to be produced, the other plastic material must absorb the laser radiation, for example by applying the optothermal converting on a surface. When this plastic material absorbs sufficient energy it begins to fuse and transmits its energy to the other plastic material. In order that the energy can actually be transmitted to the partner, the separation between both is typically less than 100 µm. During the laser welding process, both materials are pressed together; otherwise a secure bond (weld) cannot be guaranteed, despite the application of energy. The pressure required to join the plastic components should be applied as close as possible to the weld; only in this way can the externally applied compaction pressure cause the melts to blend and the plastic parts to weld to each other.

### Laser marking

Laser marking produces a mark in the laser processable article.

The mark may be the result of carbonisation of the resin used to produce the article or may be induced by ingredients in the resin.

### EXAMPLES

### Materials

All materials used in the following examples were readily available from standard sources such as ALDRICH CHEMICAL Co. (Belgium) and ACROS (Belgium) unless otherwise specified. The water used was deionized water.

**Polyprop,** a propylene powder available as HB306 MO from BOREALIS.

**Polyester,** a polyester powder available as ECOFLEX® F BX 7011 from BASF.

### Example 1

### Preparation of IR-01

IR-01 was synthesised using the synthetic methods disclosed in EP-A 2463109 (AGFA GEVAERT), paragraphs [0150] to [0159].

The chemical formula of IR-01 is given below.

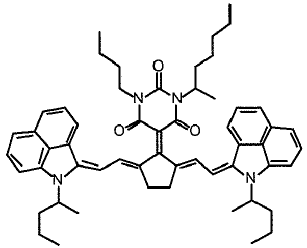

### Preparation of IR-02

The preparation of IR-02 is described below.

### Preparation of INT-01

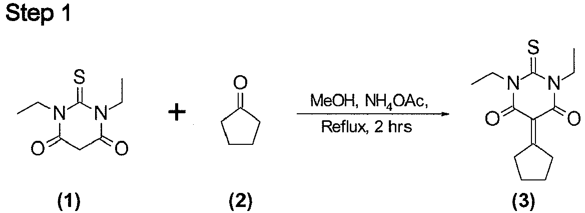

Compound (1) (0.25 mol, 1 equiv., 50.1 g) and compound (2) (0.5 mol, 2 equivs., 42.1 g) were dissolved in MeOH (75 mL). 0.3 g ammonium acetate (NH₄OAc) was then added and the reaction mixture was stirred at reflux for 8 hours. The reaction mixture was allowed to cool down to room temperature.

The precipitate was collected by filtration and washed with MeOH. The product (3) was obtained with a yield of 81%.

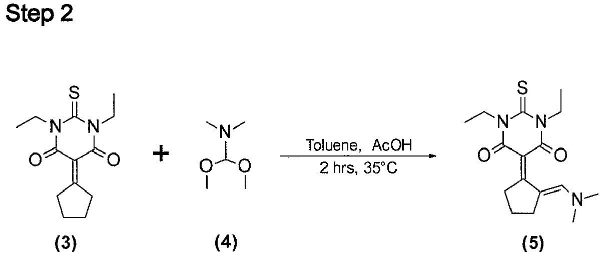

Compound (3) (0.2 mol, 1 equiv., 53.3 g) was dissolved in toluene (375 mL). The acetic acid was added (0.2 mol, 1 equiv., 12 g) and the reaction mixture was stirred for 5 minutes. Compound (4) (0.24 mol, 1.2 equivs., 28.6 g) was then added and the reaction mixture was stirred at 35°C for 2.5 hours. After cooling to room temperature, compound (5) was collected by filtration and washed with MTBE.

The product was obtained with a yield of 69%.

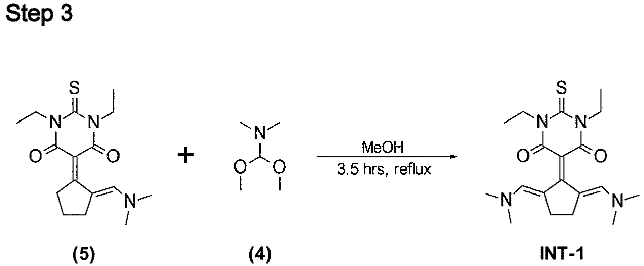

At reflux, compound (5) (0.12 mol, 1 equiv., 38.4 g) was dissolved in MeOH (120 mL). Compound (4) (0.59 mol, 4.9 equivs., 70 g) was added dropwise over 30 minutes. The reaction mixture was stirred overnight at reflux; then cooled down to 0°C and stirred during 15 min.

The product was collected by filtration and first washed with MeOH.

INT-1 was obtained with a yield of 59%.

### Preparation of INT-02

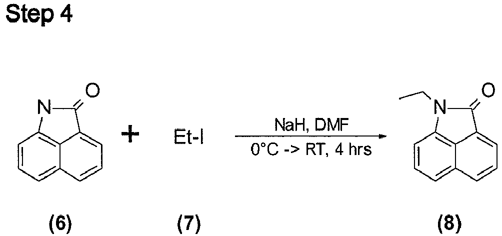

Compound (6) (6.65 g, 39 mmol, 1 equiv.) and NaH (2.81 g, 117 mmol, 3 equivs.) were dissolved in 100 mL dimethylformamide (DMF) and cooled to 0°C. Ethyl iodide (7.33 g, 47 mmol, 1.2 equivs.) was then added dropwise. The reaction mixture was stirred at 0°C for 30 minutes. Then, the reaction mixture was stirred at room temperature for another 4 hours. After completion, ice water (200 mL) was added. The reaction mixture was extracted with ethyl acetate (2 x 150 mL). The organic layer was washed with brine (i.e. a saturated NaCl solution) and dried over MgSO₄. The solid was filtered off and the filtrate was concentrated under reduced pressure.

The product was obtained with a yield of 92%.

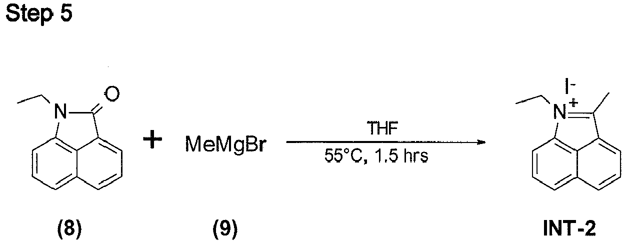

Under inert atmosphere, compound (8) (140 g, 0.7 mol, 1 equiv.) was dissolved in THF (220 mL) and compound (9) (270 mL of a solution of 22% in THF with d = 1.03, 1.1 equivs.) was added dropwise over 30 minutes at a maximum temperature of 55°C. The reaction mixture was stirred for 1 hour at 55°C. After completion, the mixture was cooled down to 35°C and poured into a mixture of H₂O/HCl (1700 mL/300 g, solution at 20°C), with a constant air flow. Nal (120 g, 0.80 mol, 1.15 equivs.) was then added and the reaction mixture was stirred at 30°C for 1 hour. The solid was filtered off and washed with H₂O and Acetone.

The product was obtained with a yield of 89%.

### Preparation of IR-02

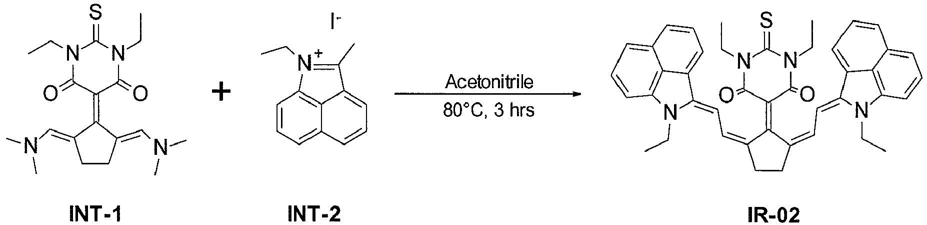

INT-1 (6 g, 15.9 mmol, 1 equiv.) and INT-2 (13.2 g, 38.2 mmol, 2.4 equivs.) were stirred in acetonitrile (720 mL) at 80°C for 4 hours. After completion, the reaction mixture was allowed to cool down to room temperature. The solid was collected by filtration and washed with acetonitrile and MTBE.

IR-2 was obtained with a yield of 99%.

### Preparation of the extruded resin articles

Two type of resins powders were used to prepare the resin based articles, polypropylene and polyester. The composition of the extruded foils XFoil 1 to 6 are given in the Table 2.

XFoil-1 was prepared by extruding the Polyprop powder in a Prism EuroLab 16 extruder, available from Thermo Fisher Scientific, using the following conditions:
product temperature = 230°C; die pressure = 30% torr; and motor torque = 220 rpm. For preparing XFoil-3 and XFoil-5, the IR absorber IR-01 or IR-02 was mixed with the Polyprop before extrusion. The amount of IR absorber was in each case 0.025 wt% based on the total weight of the foil.

XFoil-2 was prepared by extruding the Polyester powder in an extruder (180°C, 40% torr, 150 rpm). For preparing XFoil-4 and XFoil-6, the IR absorber IR-01 or IR-02 was mixed with the Polyester before extrusion. The amount of IR absorber was in each case 0.025 wt% based on the total weight of the foil.

After extrusion the extruded foils XFoil 1 to 6 according to Table 2 were obtained. The thickness of the extruded foils was approximately 3.5 mm.

**Table 2**

| | Polymer | IR absorber |
|---|---|---|
| XFoil-1 | Polyprop | - |
| XFoil-2 | Polyester | - |
| XFoil-3 | Polyprop | IR-01 |
| XFoil-4 | Polyester | IR-02 |
| XFoil-5 | Polyprop | IR-01 |
| XFoil-6 | Polyester | IR-02 |

### Laser processing of the extruded resin articles

The Infrared dispersions IR-DISP-02 was prepared by mixing 15 g of the infrared compound IR-02 with 15 g of Ajisper PB821 and 270 g of ethyl acetate using a DISPERLUX™ dispenser. Stirring was continued for 30 minutes.

### Laser Marking

The extruded foils XFoils 1 to 6 were laser marked using an optically pumped semiconductor laser emitting at 1064 nm (Genesis MX 1064-10000 MTM from Coherent) and using 70 % of its nominal power.

The optical density of the laser markings were measured with a GretagMacbeth SPM50 spectrophotometer and are shown in Table 3.

**Table 3**

| Extruded Foil | resin | IR absorber | Optical Density Laser marking |
|---|---|---|---|
| XFoil-1 | Polyprop | - | 0.009 |
| XFoil-2 | Polyester | - | 0.014 |
| XFoil-3 | Polyprop | IR-1 | 0.281 |
| XFoil-4 | Polyester | IR-2 | 0.467 |
| XFoil-5 | Polyprop | IR-1 | 0.404 |
| XFoil-6 | Polyester | IR-2 | 0.776 |

It is clear from the results of Table 3 that the laser markings of the extruded foils comprising IR-2 as IR absorber have a higher optical density compared to those having no infrared absorber or those having IR-1 as IR absorber.

It is also clear that the laser marking on the polyester foils have a higher density compared to those on the polypropylene foils.

### Laser Drilling

Laser drilling was carried out on the extruded polyester foils XFoils 2, 4 and 6 using a Coherent 8 W YAG laser (1064 nm). The diameter of the laser (1/e²) was 70-80 µs.

The laser operated in drill mode, i.e. pulsed mode. The frequency was 4 kHz (period = 250 µs in which the laser was on during 200 µs and of during 50 µs). The exposure time for each "drilling" was 300 ms.

After exposure, the depth and the width of the drilled holes were measured using the integrated measurement system of a SteREO Discovery.V12 microscope available from ZEISS.

The results are shown in Table 4.

**Table 4**

| Extruded Foil | Depth (µm) | Width (µm) |
|---|---|---|
| XFoil-2 | 0 | 0 |
| XFoil-4 | 1.419 | 1.178 |
| XFoil-6 | 1.561 | 1.577 |

It is clear from the results of Table 4 that the depth and especially the width of the drilled holes are larger when the IR-02 is used.

## Claims

1. A near infrared (NIR) laser processable resin comprising an optothermal converting agent,
**characterized in that** the optothermal converting agent includes a NIR absorbing compound having a chemical structure according to Formula I, 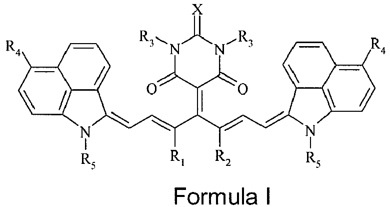 wherein
X is O or S,
R₁ and R₂ represent the necessary atoms to form a substituted or unsubstituted 5 or 6 membered ring,
R₃ and R₅ are independently selected from the group consisting of an unsubstituted alkyl group, an unsubstituted alkenyl group, an unsubstituted alkynyl group, an unsubstituted aralkyl group, an unsubstituted alkaryl group and a substituted or unsubstituted (hetero)aryl group,
R₄ is selected from the group consisting of a hydrogen, an unsubstituted alkyl group, an unsubstituted alkenyl group, an unsubstituted alkynyl group, an unsubstituted aralkyl group, an unsubstituted alkaryl group, a substituted or an unsubstituted (hetero)aryl group, a halogen, an unsubstituted alkoxy group, a substituted or an unsubstituted aryloxy group, a substituted or an unsubstituted heteroaryloxy group, an ester, an amine, an amide, a nitro, a thioalkyl group, a substituted or an unsubstituted thioaryl group, a substituted or an unsubstituted thioheteroaryl group, a carbarmate, an ureum, a sulfonamide, a sulfoxide and a sulfone,
with the proviso that all hydrocarbon groups in Formula I are straight chain hydrocarbon groups.

2. The NIR laser processable resin according to claim 1 wherein Rg is selected from the group consisting of a hydrogen, a chlorine, a bromine, a methyl, an ethyl, a methoxy group, an ethoxy group, a n-propoxy group and a n-butoxy group.

3. The NIR laser processable resin according to claims 1 or 2 wherein the resin is selected from the group consisting of a polyester, a polyamide and a polyolefin.

4. The NIR laser processable resin according to any of the preceding claims wherein the glass transition temperature (Tg) of the resin is below 200°C.

5. A method of preparing a NIR laser processable article comprising a step of casting, extrusion or injection moulding a resin as defined in any of the claims 1 to 4.

6. A NIR laser processable article obtained by a method as defined in claim 5.

7. The NIR laser markable article according to claim 6 wherein the article is a foil.

8. A method of NIR laser processing the NIR infrared laser processable article according to claims 6 or 7 comprising the step of exposing at least part of the article with a Near Infrared (NIR) laser.

9. The method of NIR laser processing according to claim 8 wherein the resin based article is a foil wrapped around a packaging.

10. The method of NIR laser processing according to claims 8 or 9 wherein laser processing is selected from the group consisting of laser cutting, laser perforating, laser marking and laser welding.
